# EUROPEAN PATENT APPLICATION

(11) **EP 0 899 303 A2**
(43) Date of publication of application: **03.03.1999**
(21) Application number: 98306819.8
(22) Date of filing: 26.08.1998
(51) Int. Cl.: C08L 69/00, C08J 3/00

(54) **Polycarbonate molding compositions**

(30) Priority: 29.08.1997 US 920964
(71) Applicant: GENERAL ELECTRIC COMPANY, Schenectady, NY 12345 (US)
(72) Inventor: Dekkers, Dimphna Cornelia Adriana, 4702 CW Roosendaal (NL); Hoeks, Theodorus Lambertus, 4613 AS Bergen op Zoom (NL); Groothuis, Adelbert H.H., 4611 LW Bergen op Zoom (NL)
(74) Representative: Szary, Anne Catherine, Dr.

(57) **Abstract**

The performance of molded polycarbonate resin articles in the Underwriters Laboratory UL-94 test for drip-inhibition is improved by incorporating a drip-inhibiting proportion of fluoropolymer resin particles at least partially encapsulated by a thermoplastic copolymer into agglomerates, said fluorinated polymer resin particles having average particle diameters within the range of about 0.1 to 4µm; and said agglomerates having an average diameter of from 30 to 70µm. Preferably the fluoropolymer is polytetrafluoroethylene and the thermoplastic copolymer is styrene acrylonitrile.

## Description

The invention is related to thermoplastic blends of aromatic carbonate polymers and styrene-acrylonitrile copolymer.

### Brief Description of Related Art

Aromatic carbonate polymers, such as polycarbonates, have become major commercial thermoplastics in view of their excellent physical properties. Furthermore, the physical properties can sometimes be improved by blending with other thermoplastics, although the choice of the type of additive thermoplastic and the amount is often critical.

For example, blends of polycarbonates with styrene-acrylonitrile copolymers (SAN) have significantly improved flow properties for purposes of molding; see for example the description in U.S. Patent 5,106,907.

Polytetrafluoroethylene (PTFE) resin is also an additive to polycarbonate molding composition, particularly if the composition is to be used for molding artides such as instrument housings which require fire and drip retardancy; see for example the US. Patents 3,294,871 and 5,102,696. Normally, polytetrafluoro-ethylene (PTFE) is added to polycarbonate molding blends to prevent molded articles from dripping in a starting fire. Certain applications demand a specific rating in the Underwriters Laboratory Test UL-94, like V-0 at 1.00 mm. This requirement is needed in, for example, electrical applications, such as enclosures and switches. If the materials drip in the UL-94 test, they can not be used in these applications.

US patent application Serial No. 08/ 606,027 filed October 6, 1995, describes a polymer blend in which groups of tetrafluoroethylene derivatives are encapsulated by a polymer or copolymer. These blends have been found very useful as additives for increasing the fire resistance of polymer compositions.

We have now found that close control of the particle size of these encapsulated PTFE particles is key to obtaining desired UL-94 performance in polycarbonate articles. The size of the particles has an important influence on the behavior of the PTFE in the flame.

Control of particle size of the PTFE alone does not solely determine the effect of the anti-drip agent. One also needs to control the average diameter of the agglomerates of the encapsulated particles. The normal shearing which occurs during usual processing steps are generally used stretches the polymer chains to give the desired anti-dry performance.

Control of particle and agglomerate size makes the produces products which meet desired anti-drip properties when produced in conventional equipment.

We are not to be bound by a theory of operation, but we hypothesize that encapsulated PTFE agglomerates are being broken up and the PTFE particles are stretched during extrusion so a thermodynamically unfavorable situations occurs for the PTFE molecule. Upon burning, the material relaxes, forming the optimal conformation, and retracts from the flame. The approach is addressed by controlling the agglomerate and particle size in such a way that the shear stresses in the extruder are able to affect the structure of the molecule. If the particle is too small, the forces in the extruder are not capable of extending the chain. When the size of the agglomerates and particles is within limits the molecules are stretched and the PTFE reacts in a starting fire as described above.

The invention comprises a thermoplastic molding composition, which comprise;
an aromatic, thermoplastic polycarbonate resin;
a drip-inhibiting proportion of particles of a fluorinated polyolefin resin totally or partially encapsulated by a thermoplastic copolymer into agglomerates said fluorinated polyolefin resin having average particle diameters within the range of about 0.1 to 4 µm; and said agglomerates having average diameters of from 30 to 70 µm, preferably from 35 to 65 µm and more preferably from 40 to 65 µm,

The molding compositions of the invention are useful to mold articles of improved UL-94 drip test performance.

The aromatic carbonate polymers useful in the compositions of the present invention include polycarbonates as well as copolyester-carbonates. Polycarbonate and copolyester-carbonates are well known resins, commercially available. Methods of preparing polycarbonates by interfacial polymerization are also well known; see for example the details provided in the U.S. Patents 3,028,365; 3,334,154; 3,275,601; 3,915,926; 3,030,331; 3,169,121; 3,027,814; and 4,188,314, all of which are incorporated herein by reference thereto. Preparation of polycarbonate by the melt process is equally known with an existing plant in Japan and another under construction in Spain.

In general, the method of interfacial polymerization comprises the reaction of a dihydric phenol with a carbonyl halide (the carbonate precursor). The method of melt polymerization comprises the reaction of a dihydric phenol with a diaryl carbonate.

Although the reaction conditions of the preparative processes may vary, several of the preferred interfacial processes typically involve dissolving or dispersing the diphenol reactants in aqueous caustic, adding the resulting mixture to a suitable water immiscible solvent medium and contacting the reactants with the carbonate precursor, such as phosgene, in the presence of a suitable catalyst and under controlled pH conditions. The most commonly used water immiscible solvents include methylene chloride, 1,2-dichloroethane, chlorobenzene, toluene, and the like.

The catalyst employed accelerates the rate of polymerization of the dihydric phenol reactant with the carbonate precursor. Representative catalysts include but are not limited to tertiary amines such as triethylamine, quaternary phosphonium compounds, quaternary ammonium compounds, and the like. The preferred process for preparing polycarbonate resins comprises a phosgenation reaction. The temperature at which the phosgenation reaction proceeds may vary from below 0°C, to above 100°C. The phosgenation reaction preferably proceeds at temperatures of from room temperatures (25°C) to 50°C. Since the reaction is exothermic, the rate of phosgene addition may be used to control the reaction temperature. The amount of phosgene required will generally depend upon the amount of the dihydric phenols.

The dihydric phenols employed are known, and the reactive groups are the two phenolic hydroxyl groups. Some of the dihydric phenols are represented by the general formula: 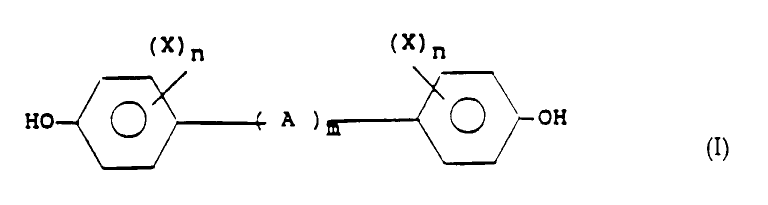 wherein A is a divalent hydrocarbon radical containing from 1 to about 15 carbon atoms; a substituted divalent hydrocarbon radical containing from 1 to about 15 carbon atoms and substituent
groups such as halogen;

-S-; -SS-; -S(O)-; -S(O)₂-; -O-: or -C-;

each X is independently selected from the group consisting of hydrogen, halogen, and a monovalent hydrocarbon radical such as an alkyl group of from 1 to about 8 carbon atoms, an aryl group of from 6-18 carbon atoms, an aralkyl group of from 7 to about 14 carbon atoms, an alkaryl group of from 7 to about 14 carbon atoms, an alkoxy group of from 1 to about 8 carbon atoms, or an aryloxy group of from 6 to 18 carbon atoms; and m is zero or 1 and n is an integer of from 0 to 4.

Typical of some of the dihydric phenols employed are bis-phenols such as bis(4-hydroxy-phenyl)methane, 2,2-bis(4-hydroxyphenyl)propane (also known as bisphenol-A), 2,2-bis(4-hydroxy-3,5-dibromophenyl)propane; dihydric phenol ethers such as bis(4-hydroxyphenyl) ether, bis(3,5-dichloro-4-hydroxyphenyl) ether; dihydroxydiphenyls such as p,p'-dihydroxydiphenyl, 3,3'-dichloro-4,4'-dihydroxydiphenyl; dihydroxyaryl sulfones such as bis(4-hydroxyphenyl) sulfone, bis (3,5-dimethyl-4-hydroxyphenyl) sulfone, dihydroxy- benzenes such as resorcinol, hydroquinone, halo- and alkylsubstituted dihydroxybenzenes such as 1,4-dihydroxy-2,5-dichlorobenzene, 1,4-dihydroxy-3-methylbenzene; and dihydroxydiphenyl sulfides and sulfoxides such as bis(4-hydroxyphenyl) sulfide, bis(4-hydroxyphenyl) sulfoxide and bis(3,5-dibromo-4-hydroxyphenyl) sulfoxide. A variety of additional dihydric phenols are available and are disclosed in U.S. Pat. Nos. 2,999,835; 3,028,365 and 3,153,008; all of which are incorporated herein by reference. It is, of course, possible to employ two or more different dihydric phenols or a combination of a dihydric phenol with glycol.

The carbonate precursor can be either a carbonyl halide, a diarylcarbonate or a bishaloformate. The carbonyl halides include carbonyl bromide, carbonyl chloride, and mixtures thereof. The bishaloformates include the bishaloformates of dihydric phenols such as bischloroformates of 2,2-bis(4-hydroxyphenyl)-propane, 2,2-bis(4-hydroxy-3,5-dichlorophenyl)-propane, hydroquinone, and the like, or bishaloformates of glycols such as bishaloformates of ethylene glycol, and the like. While all of the above carbonate precursors are useful, carbonyl chloride, also known as phosgene, is preferred for the interfacial process. Diphenylcarbonate is preferred for the melt process.

Also included within the scope of the present invention are the high molecular weight thermoplastic randomly branched polycarbonates. These randomly branched polycarbonates are prepared by coreacting a polyfunctional organic compound with the aforedescribed dihydric phenols and carbonate precursor. The polyfunctional organic compounds useful in making the branched polycarbonates are set forth in U.S. Pat. Nos. 3,635,895 and 4,001,184 which are incorporated herein by reference. These polyfunctional compounds are generally aromatic and contain at least three functional groups which are carboxyl, carboxylic anhydrides, phenols, haloformyls or mixtures thereof. Some nonlimiting examples of these polyfunctional aromatic compounds include 1,1,1-tri(4-hydroxyphenyl) ethane, trimellitic anhydride, trimellitic acid, trimellitoyl trichloride, 4-chloroformyl phthalic anhydride, pyromellitic acid, pyromellitic dianhydride, mellitic acid, mellitic anhydride, trimesic acid, benzophenonetetracarboxylic acid, benzophenone-tetracarboxylic anhydride, and the like. The preferred polyfunctional aromatic compounds are 1,1,1-tri(4-hvdroxyphenyl)ethane, trimellitic anhydride or trimellitic acid or their haloformyl derivatives. Also included herein are blends of a linear polycarbonate and a branched polycarbonate.

The polycarbonate resin used in the process of the invention may be of relatively low weight average molecular weight or of relatively high weight average molecular weight (M_{w}). The lower M_{w} resins are generally end-capped polycarbonates.

The so-called "end-capped" polycarbonates are prepared by the above-described procedures of producing aromatic carbonate polymers, wherein the reaction mixture includes small amounts of molecular weight regulators or chain terminators to provide end or terminal groups on the carbonate polymer and thereby control the molecular weight of the polycarbonate.

A molecular weight regulator, i.e.; a chain stopper, is generally added to the reactants prior to or during the contacting of them with the carbonate precursor. Useful molecular weight regulators include, but are not limited to, monohydric phenols such as phenol, chroman-I, paratertiarybutylphenol, and the like. A preferred polycarbonate component of the compositions of the invention is one end-capped with p-cumylphenol.

Other compounds that act as chain terminators for the carbonate polymers are also known. Thus, U.S. Pat. No. 3,085,992 discloses alkanol amines as chain terminators; U.S. Pat. No. 3,399,172 teaches imides as chain terminators; U.S. Pat. No. 3,275,601 discloses that aniline and methyl aniline function as chain terminators in the interfacial polymerization process for producing polycarbonates; and U.S. Pat. No. 4,011,184 discloses primary and secondary amines as molecular weight regulators for polycarbonate. Furthermore, U.S. Pat. No.3,028,365 discloses that aromatic amines and other monofunctional compounds can be used to control or regulate the molecular weight of the polycarbonates, thereby forming aryl carbamate terminal groups. Aromatic polycarbonates having carbamate end groups are disclosed in U.S. Pat. No. 4,111,910. These polycarbonates are prepared using a terminating amount of ammonia, ammonium compounds, primary cycloalkyl, aliphatic or aralkyl amines and secondary cycloalkyl, alkyl or aralkyl amines.

The aromatic carbonate polymers suitable for use in the compositions of the invention include polyester-carbonates, also known as copolyester-polycarbonates, i.e., resins which contain, in addition to recurring polycarbonate chain units of the formula: 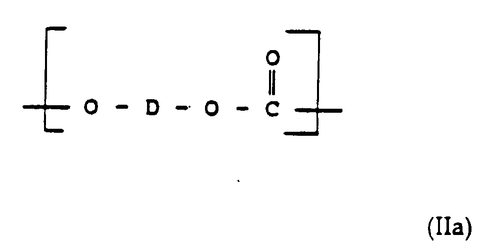 wherein D is a divalent aromatic radical of the dihydric phenol employed in the polymerization reaction, repeating or recurring carboxylate units, for example of the formula:

-[-O-C(O)-R¹-C(O)-O-D-]- (IIb)

wherein D is as defined above and R¹ is as defined below.

The copolyester-polycarbonate resins are also prepared by interfacial polymerization technique, well known to those skilled in the art; see for example the U.S. patents 3,169,121 and 4,487,896.

In general the copolyester-polycarbonate resins are prepared as described above for the preparation of polycarbonate homopolymers, but by the added presence of a dicarboxylic acid (ester precursor) in the water immiscible solvent.

In general, any dicarboxylic acid conventionally used in the preparation of linear polyesters may be utilized in the preparation of the copolyester-carbonate resins. Generallv, the dicarboxylic acids which may be utilized include the aliphatic dicarboxylic acids, the aromatic dicarboxylic acids, and the aliphatic-aromatic dicarboxylic acids. These acids are well known and are disdosed for example in U.S. Pat. No. 3,169,121 which is hereby incorporated herein by reference. Representative of such aromatic dicarboxylic acids are those represented by the general formula:

HOOC-R¹-COOH (III)

wherein R¹ represents an aromatic radical such as phenylene, naphthylene, biphenylene, substituted phenylene and the like; a divalent aliphatic-aromatic hydrocarbon radical such as an aralkyl or alkaryl radical; or two or more aromatic groups connected through non-aromatic linkages of the formula:

- E -

wherein E is a divalent alkylene or alkylidene group. E may also consist of two or more alkylene or alkylidene groups, connected by a non-alkylene or alkylidene group, such as an aromatic linkage, a tertiary amino linkage, an ether linkage, a carbonyl linkage, a silicon-containing linkage, or by a sulfur-containing linkage such as sulfide, sulfoxide, sulfone and the like. In addition, E may be a cycloaliphatic group of five to seven carbon atoms, inclusive, (e.g. cyclopentyl, cyclohexyl), or a cycloalkylidene of five to seven carbon atoms, inclusive, such as cyclohexylidene. E may also be a carbon-free sulfur-containing linkage, such as sulfide, sulfoxide or sulfone; an ether linkage; a carbonyl group; a direct bond; a tertiary nitrogen group; or a silicon-containing linkage such as silane or siloxy. Other groups which E may represent will occur to those skilled in the art. For purposes of the present invention, the aromatic dicarboxylic acids are preferred. Thus, in the preferred aromatic difunctional carboxylic acids of the formula (III), R¹ is an aromatic radical such as phenylene, biphenylene, naphthylene, or substituted phenylene. Some non-limiting examples of aromatic dicarboxvlic acids which may be used in preparing the poly(ester-carbonate) or polyarylate resins of the instant invention include phthalic acid, isophthalic acid, terephthalic acid, homophthalic acid, o-, m-, and p-phenylenediacetic acid, and the polynuclear aromatic acids such as diphenyl dicarboxylic acid, and isomeric naphthalene dicarboxylic acids. The aromatics may be substituted with Y groups. Y may be an inorganic atom such as chlorine, bromine, fluorine and the like; an organic group such as the nitro group; an organic group such as alkyl; or an oxy group such as alkoxy, it being only necessary that Y be inert to and unaffected by the reactants and the reaction conditions. Particularly useful aromatic dicarboxylic acids are those represented by the general formula:- 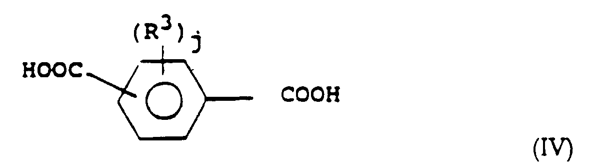 wherein j is a positive whole integer having a value of from 0 to 4 inclusive; and each R³ is independently selected from the group consisting of alkyl radicals, preferably lower alkyl (1 to about 6 carbon atoms).

Mixtures of these dicarboxylic acids may be employed. Therefore, where the term dicarboxylic acid is used herein it is to be understood that this term includes mixtures of two or more dicarboxylic acids.

Most preferred as aromatic dicarboxylic acids are isophthalic acid, terephthalic acid, and mixtures thereof. A particularly useful difunctional carboxylic acid comprises a mixture of isophthalic acid and terephthalic acid wherein the weight ratio of terephthalic acid to isophthalic acid is in the range of from about 10:1 to about 0.2:9.8.

Rather than utilizing the dicarboxylic acid per se, it is possible, and sometimes even preferred, to employ the reactive derivatives of said acid. Illustrative of these reactive derivatives are the acid halides. The preferred acid halides are the acid dichlorides and the acid dibromides. Thus, for example instead of using isophthalic acid, terephthalic acid or mixtures thereof, it is possible to employ isophthaloyl dichloride, terephthaloyl dichloride, and mixtures thereof.

The proportions of reactants employed to prepare the copolyester-carbonate resins will vary in accordance with the proposed use of the blends of the invention containing this product resin. Those skilled in the art are aware of useful proportions, as described in the U.S. patents referred to above. In general, the amount of the ester bonds may be from about 5 to about 90 mole percent, relative to the carbonate bonds. For example, 5 moles of bisphenol A reacting completely with 4 moles of isophthaloyl dichloride and 1 mole of phosgene would give a copolyester-carbonate of 80 mole percent ester bonds.

The preferred polycarbonates for use in the present invention are those derived from bisphenol A and phosgene and having an intrinsic viscosity of about 0.3 to about 1.5 deciliters per gram measured in methylene chloride at a temperature of 25°C and a porosity within the range of from 0.00 to 2.0 ml/gm.

The fluorinated polyolefins which are used in the present invention, as well as methods for their preparation, are described interalia in Billmeyer, Fred W., Jr. Textbook of Polymer Science, Interscience Publishers, New York, N.Y., 1966, pp. 425-427; Monermoso, J.C., rubber Chem. Tech., 34, 1521 (1961); and Rudner, M.A. Fluorocarbons, Reinhold Publishing Corp., New York, N.Y., and US. Patent 4,663,991 which is incorporated herein by reference.

The preferred fluorinated polyolefin is polytetrafluoroethylene (PTFE) resin, employed in the process and compositions of this invention, preferably of a fibrillar form.

PTFE is a finely-divided powder or fluff as obtained from the polymerization reaction. When a mass of this finely-divided, untreated polytetra-fluoroethylene resin of average particle size 0.1 to 0.2 micron, such as that illustrated in Figures 1 and 2 of the article "Teflon" Tetrafluoroethylene Resin Dispersion by J.F. Lontz and W. B. Happoldt, Jr. in Ind. and Eng. Chem. vol. 44, p. 1800, 1952, is sheared by rubbing in the hands, the particles tend to stick together and form a coherent mass. If this mass is drawn out and examined with a microscope at 50-100X, it shows fibers of various sizes. Examination with an electron microscope shows that these fibers are bundles of smaller fibers, many of which consist of strings of the primary particles held together by very fine fibrils having diameters from one-fourth to one-tenth or less of the diameter of the particles. Polytetrafluoroethylene which has the ability of causing the particles to adhere and draw out into ultrafine fibrils when they are rubbed together with mechanical shearing, is preferred for use in the practice of this invention.

The effective amount of fluoropolymer for drip-inhibition which is incorporated into the polycarbonate resin by the process of the invention may be within the range of from about 0.01 to about 5 parts by weight for each 100 parts of the polycarbonate, preferably from about 0.015 to about 3 parts, more preferably from about 0.02 to about 2 parts and still more preferably from about 0.02 to about 1 part.

The fluoropolymer is preferably used as an aqueous dispersion thereof, the particles having a preferred average size (diameter) of from 0.05 to 4 microns, more preferably from 0.08 to 2 microns and still more preferably from 0.1 to 1 micron. By spray-drying the aqueous dispersion of fluoropolymer mixed with the aqueous dispersion of thermoplastic copolymer, the fluoropolymer particles are conveniently encapsulated by the copolymer to form the agglomeates.

In accordance with the process of the invention, the two components, i.e., the polycarbonate resin and the agglomerates of encapsulated fluoropolymer particles are mixed together at ambient temperatures and at prescribed rates, employing conventional mixing equipment, such as the prior art apparatus descried above. In general, the mixtures of components may be blended by mixing in conventional mixing rolls, dough mixers, Banbury mixers and the like. Representative of known and useful apparatus for coating particular materials with a homogeneous, liquid is that described in US. Patent 3,716,020 (De Wit et al.) issued February 18, 1973, and incorporated herein by reference thereto.

The styrene-acrylonitrile (SAN) copolymer, which is the preferred polymer for encapsulating the PTFE particles of any of the well-known copolymers usable for this purpose, can be prepared by copolymerization of from about 68% to about 80% (preferably from about 70% to about 78%) styrene and from about 20% to about 32% (preferably from about 22% to about 30%) of acrylonitrile. The molecular weight of SAN can be varied within a wide range, typically from about 30,000 to about 600,000, but this is not critical.

SAN is readily produced by known processes such as mass, solution, suspension, or nulsion polymerization.

In the broader scope of the invention, the encapsulating copolymer component of the agglomerates of encapsulated PTFE particles can be present in a proportion of from about 40 to about 50%, by weight of the agglomerates at which level it provides good processing properties, notably shear thinning of the FIFE particles. It is more preferred that the copolymer component be from about 45 to about 49% by weight and still more preferred that it is no more than 49% by weight.

The partide sizes (average) of the SAN particles are advantageously within the range of 35 to 70µm and more preferably within the range of 40 to 65 µm.

The blends of the invention may be modified by the addition of additives known to the art of plastics compounding. Such additives can may include fillers (such as clay or talc), reinforcing agents (such as glass fibers), impact modifiers, other resind, plasticizers, flow promoters and other processing aids, stabilizers, colorants, mold release agents, flame retardants, ultraviolet screening agents, and the like.

The production of the compositions of the invention may be accomplished by blending the components using any of the blending means known for blending the thermoplastics, such as blending in a kneading machine (such as a Banbury mixer, Werner Pfleiderer blender, or in an extruder, or by means or a roll mill) all of which will provide the appropriate shearing to achieve the desired fire retardant properties of the composition.

The compounded composition of the invention can be extruded and cut up, if so desired, into granules, pellets, and the like by standard techniques. The further processing of the compounded compositions can be carried out by conventional molding or extrusion processes well known in the art.

The invention will be better understood with reference to the following examples, which are presented for purposes of illustration rather than for limitation, and which set forth the best mode contemplated for carrying out the invention.

Where reported, the Underwriters, Laboratory Test UL-94 Test is as follows:

The resin is injection molded at about 300°C. into test bars of about 12.7 cm. by 1.27 cm. by 3.175 in thickness. These test bars are subjected to the test procedure set forth in Underwriters' Laboratories, Inc., Bulletin UL-94, Burning Test for Classified Materials. In accordance with this test procedure, materials that pass are rated V-0, V-I or V-II based on the results of 5 specimens. The criteria for each V (for vertical) rating per UL-94 is briefly as follows:
"V-0": Average flaming and/or glowing after removal of the igniting flame shall not exceed 10 seconds and none of the5 specimens shall drip flaming particles which ignite absorbent cotton. Total flaming/glowing time after ignition of the 5 specimens shall not exceed 50 seconds.

### Example 1-6

Molding compositions were made by blending the ingredients shown in the table below in a Leistriz ZSK 36 extruder at 270-300°C and 300 rpm. The blended and extruded material was then pelletized, dried and injection molded at about 240°C to prepare test specimens. Physical properties were measured on injection molded samples using the Underwriters' Laboratory UL-94 Test Method at 1.0 mm.

The Example 1 is not of the invention, but is presented for purposes of comparison. The formulations and results are given in the following table. The polycarbonate resin was a blend of Lexan® 920 grade polycarbonate resin (General Electric Co. Pittsfield, MA.) (Examples 1 and 2) or Lexan® 940 grade polycarbonate resin (Examples 3-6). The copolymer used to form the agglomerates of PTFE particles was styrene acrylonitrile (SAN). These agglomerates were prepared using PTFE from the sources identified in the table by standard methods to give agglomerates of the average size and weight ratio of PTFE/SAN as set forth in the table.

All US patents and patent applications identified herein are expressly incorporated herein by reference.

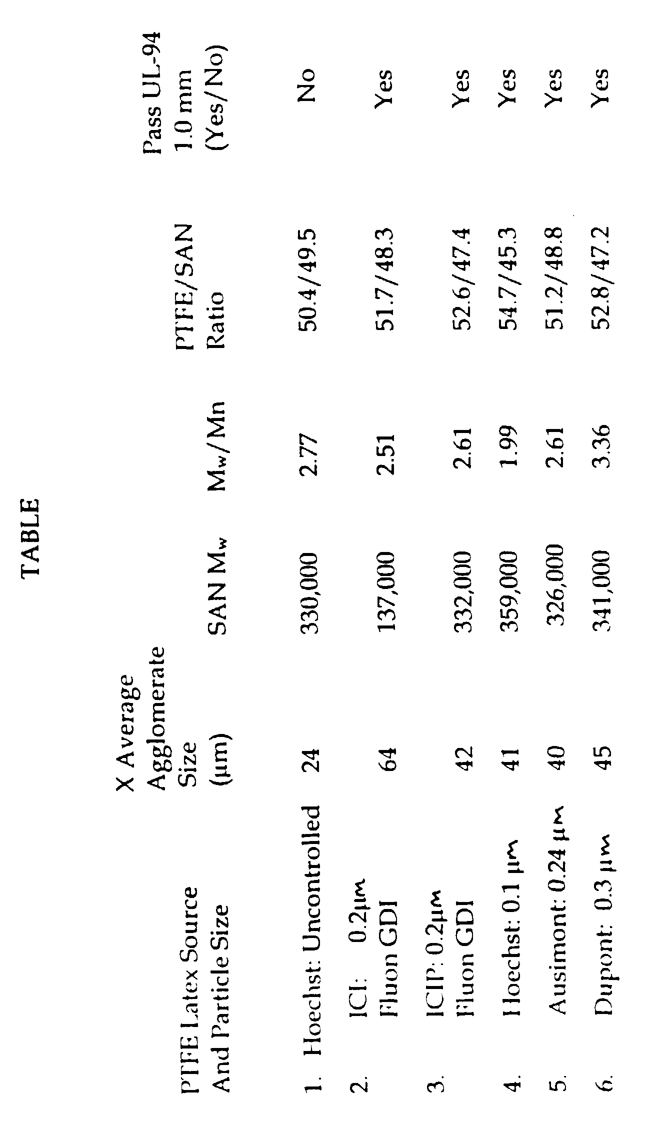

## Claims

1. A thermoplastic molding composition, which comprises;
an aromatic thermoplastic polycarbonate resin;
a drip-inhibiting proportion of fluoropolymer resin particles at least partially encapsulated by a thermoplastic copolymer into agglomerates, said fluorinated polymer resin particles having average particle diameters within the range of about 0.1 to 4µm; and said agglomerates having an average diameter of from 30 to 70µm.

2. The composition of claim 1 wherein the fluoropolymer resin is a fluorinated polyolefin resin.

3. The composition of claim 1 or claim 2 wherein the fluoropolymer is a fluorinated polyethylene.

4. The composition of claim 3 wherein the fluorinated polyethylene is polytetrafluoroethylene.

5. The composition of any preceding claim where the fluoropolymer is present in an amount of from about 0.01 to about 5 parts by weightper 100 parts by weight of polycarbonate.

6. The composition of any preceding claim wherein the thermoplastic copolymer is styrene acrylonitrile copolymer.

7. The composition of any preceding claim wherein the thermoplastic copolymer is from about 40 to about 50% by weight of the agglomerate.

8. The composition of claim 1 wherein the polycarbonate is prepared by an interfacial process.

9. The composition of claim 1 wherein the polycarbonate is prepared by a melt process.
